# EUROPÄISCHE PATENTSCHRIFT

(11) **EP 1 190 932 B1**
(45) Veröffentlichungstag und Bekanntmachung des Hinweises auf die Patenterteilung: **10.11.2004**
(21) Anmeldenummer: 01118786.1
(22) Anmeldetag: 09.08.2001
(51) Int. Cl.: B62D 1/06

(54) **Lenkrad**
Steering wheel
Volant de direction

(30) Priorität: 26.09.2000 DE 20016639 U
(43) Veröffentlichungstag der Anmeldung: 27.03.2002
(73) Patentinhaber: TRW Automotive Safety Systems GmbH, 63743 Aschaffenburg (DE)
(72) Erfinder: Lorenz, Christian, 63849 Leidersbach (DE)
(74) Vertreter: Sties, Jochen, Dipl.-Ing.

(56) Entgegenhaltungen:
- GB-A- 1 043 404
- US-A- 1 984 033
- US-A- 2 298 596
- US-A- 3 726 152
- US-A- 4 421 181

## Beschreibung

Die Erfindung betrifft ein Lenkrad mit einem Kranzskelett und einer Kranzhülle, wobei zwischen dem Kranzskelett und der Kranzhülle mindestens ein schwingungsdämpfendes Element angeordnet ist.

Ein solches Lenkrad ist aus der GB-A-1,043,404 bekannt. Es weist einen Kern auf, der mit einem Schaummaterial umgeben ist. Um das Schaummaterial herum ist eine Ummantelung aus Kunststoff vorgesehen.

Aus der US-A-4,421,181 ist eine schwingungsdämpfende Anordnung bekannt, die eine Vielzahl von nebeneinanderliegenden Luftkissen aufweist, die sich am Griff eines Werkzeugs abstützen.

Zur Erhöhung des Komforts gibt es in jüngster Zeit verschiedene Versuche, vom Lenkrad eines Fahrzeugs Schwingungen fernzuhalten, die beim Betrieb des Fahrzeugs entstehen. Bekannt ist beispielsweise, Schwingungstilgermassen zu verwenden, mit denen die Resonanzfrequenz des Lenkrades in einen unkritischen Bereich verschoben wird. Diese Schwingungstilgermassen können entweder zusätzliche Massen sein oder geeignet angeordnete Bauteile von beispielsweise Gassack-Rückhaltesystemen, insbesondere der Gasgenerator. Wenn zusätzliche Schwingungstilgermassen verwendet werden, führt dies zu zusätzlichen Kosten und einem erhöhten Gewicht. Wenn Bauteile des Gassack-Rückhaltesystems verwendet werden, entstehen verschiedene Probleme wie die Gasabdichtung an den Gasgeneratoren oder die Übertragung von Reaktionskräften bei der Aktivierung des Gassacks.

Die Aufgabe der Erfindung besteht darin, eine Schwingungsentkopplung des Lenkrades mit geringem Aufwand zu erzielen.

Zu diesem Zweck ist erfindungsgemäß vorgesehen, daß als schwingungsdämpfendes Element Ringe aus einem schwingungsdämpfenden Material oder Verbundmaterial verwendet werden, die im Abstand voneinander auf dem Kranzskelett angeordnet sind und die Kranzhülle stützen. mit einem Lenkradskelett und einer Kranzhülle. Die Erfindung beruht auf dem Grundgedanken, lediglich den Teil des Lenkrades schwingungstechnisch zu entkoppeln, für den dies unbedingt erforderlich ist. Dies ist die Kranzhülle, die mit den Händen eines Fahrers des entsprechenden Fahrzeugs in Berührung kommen. Wenn die Kranzhülle schwingungstechnisch entkoppelt ist, werden Schwingungen der übrigen Teile des Lenkrades, beispielsweise der Lenkradnabe oder der Lenkradspeichen, kaum wahrgenommen. Ein weiterer Vorteil der erfindungsgemäßen Gestaltung besteht darin, daß durch die Entkopplung lediglich der Kranzhülle nur eine kleinere schwingende Masse entkoppelt werden muß.

Vorteilhafte Ausgestaltungen der Erfindung ergeben sich aus den Unteransprüchen.

Die Erfindung wird nachfolgend anhand von zwei Ausführungsformen beschrieben, die in den beigefügten Zeichnungen dargestellt sind. In diesen zeigen:
- Figur 1 in einer schematischen Ansicht ein Lenkrad;
- Figur 2 in einer Schnittansicht ein Lenkrad gemäß einer ersten Ausführungsform, das nicht unter die Patentansprüche fällt und nur zur Erläuterung dient; und
- Figur 3 in einer Schnittansicht ein Lenkrad gemäß einer Ausführungsform der Erfindung.

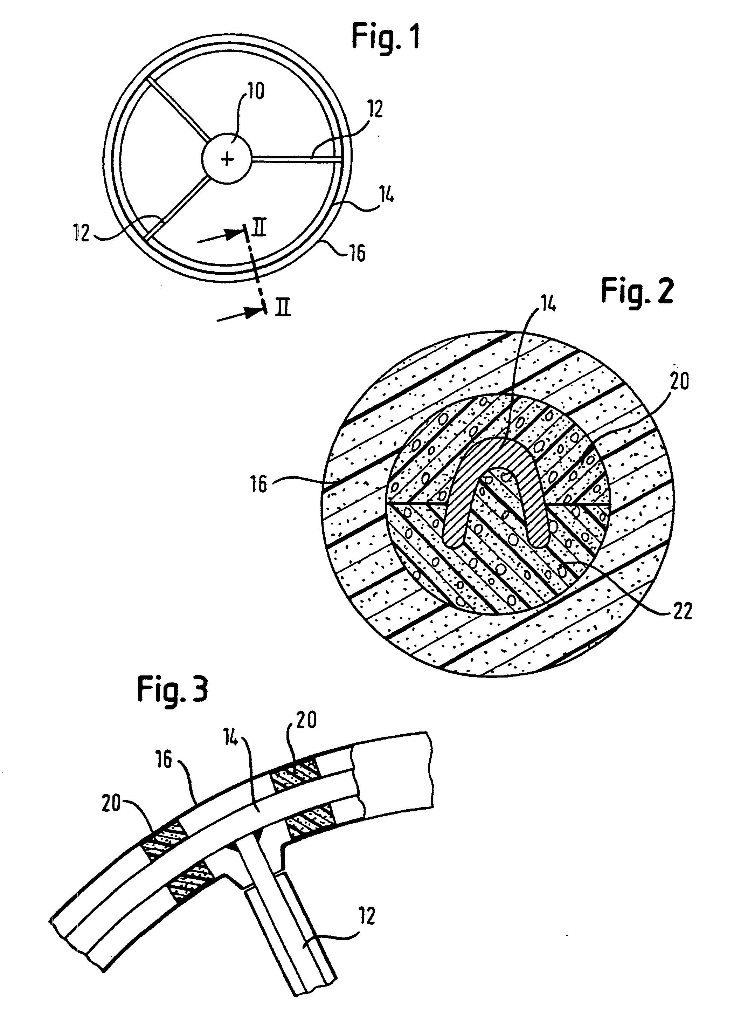

In Figur 1 ist schematisch ein Lenkrad dargestellt. Es enthält eine Lenkradnabe 10, mehrere Speichen 12 sowie ein Kranzskelett 14. Auf dem Kranzskelett 14 ist eine Kranzhülle 16 angebracht, an dem der Fahrer eines mit dem Lenkrad ausgestatteten Fahrzeugs angreift.

In Figur 2 ist ein Querschnitt durch das Kranzskelett und die Kranzhülle eines Lenkrades gemäß einer Ausführungsform gezeigt, die nicht unter die Patentansprüche fällt und nur zur Erläuterung dient. Das Kranzskelett 14 ist hier mit einem U-förmigen Querschnitt ausgeführt, der vollständig von einem schwingungsdämpfenden Element 20, 22 umgeben ist. Das schwingungsdämpfende Element besteht aus einem schwingungsdämpfenden Werkstoff, vorzugsweise aus PU-Schaum, und ist zweiteilig ausgeführt, nämlich mit einem Oberteil 20 und einem Unterteil 22. Das Oberteil 20 und das Unterteil 22 ergeben zusammen einen kreisförmigen Querschnitt.

Auf dem schwingungsdämpfenden Element 20, 22 ist die Kranzhülle 16 angeordnet, die aus einer Schale mit ringförmigem Querschnitt besteht, die auf das schwingungsdämpfende Element aufgeschäumt ist. Aufgrund der elastischen Eigenschaften des schwingungsdämpfenden Elementes 20, 22 ist die Kranzhülle 16 auf dem Kranzskelett 14 schwingungsfrei oder mindestens schwingungsgedämpft gelagert.

In Figur 3 ist ein Schnitt durch ein Lenkrad gemäß einer erfindungsgemäßen Ausführungsform gezeigt. Im Unterschied zur ersten Ausführungsform werden hier als schwingungsdämpfendes Element mehrere Ringe 20 verwendet, die anders als die von der ersten Ausführungsform bekannte durchgehende Einlage im Abstand voneinander angeordnet sind und die Kranzhülle partiell stützen. Zwischen den schwingungsdämpfenden Ringen 20 befindet sich ein Freiraum zwischen dem Kranzskelett 14 und der Kranzhülle 16. Bei der zweiten Ausführungsform besteht die Kranzhülle 16 aus einer Oberschale und einer Unterschale, die auf die schwingungsdämpfenden Ringe aufgesetzt und miteinander verbunden werden, um die Kranzhülle zu bilden.

## Patentansprüche

1. Lenkrad mit einem Kranzskelett (14) und einer Kranzhülle (16), wobei zwischen dem Kranzskelett (14) und der Kranzhülle (16) mindestens ein schwingungsdämpfendes Element (20, 22) angeordnet ist, **dadurch gekennzeichnet, daß** als schwingungsdämpfendes Element Ringe (20) aus einem schwingungsdämpfenden Material oder Verbundmaterial verwendet werden, die im Abstand voneinander auf dem Kranzskelett (14) angeordnet sind und die Kranzhülle (16) stützen.

2. Lenkrad nach Anspruch 1, **dadurch gekennzeichnet, daß** die Kranzhülle (16) aus einer Oberschale und einer Unterschale besteht.

3. Lenkrad nach einem der vorhergehenden Ansprüche, **dadurch gekennzeichnet, daß** das schwingungsdämpfende Element (20, 22) auf das Kranzskelett aufgeschäumt ist.

4. Lenkrad nach einem der vorhergehenden Ansprüche, **dadurch gekennzeichnet, daß** das schwingungsdämpfende Element (20, 22) aus PU-Schaum besteht.

## Claims

1. A steering wheel comprising a rim skeleton (14) and a rim casing (16), at least one vibration-damping element (20, 22) being arranged between the rim skeleton (14) and the rim casing (16), **characterized in that** as vibration-damping element, rings (20) made of a vibration-damping material or composite material are used, which are arranged at a distance from each other on the rim skeleton (14) and support the rim casing (16).

2. The steering wheel according to Claim 1, **characterized in that** the rim casing (16) consists of an upper shell and a lower shell.

3. The steering wheel according to any of the preceding claims, **characterized in that** the vibration-damping element (20, 22) is foamed onto the rim skeleton.

4. The steering wheel according to any of the preceding claims, **characterized in that** the vibration-damping element (20, 22) consists of polyurethane foam.

## Revendications

1. Volant de direction comportant un squelette de couronne (14) et une enveloppe de couronne (16), un élément amortissant les vibrations (20, 22) étant agencé entre le squelette de couronne (14) et l'enveloppe de couronne (16), **caractérisé en ce que** l'on utilise comme élément amortissant les vibrations des anneaux (20) en matériau amortissant les vibrations ou en matériau composite, qui sont agencés à distance les uns des autres sur le squelette de couronne (14) et qui soutiennent l'enveloppe de couronne (16).

2. Volant de direction selon la revendication 1, **caractérisé en ce que** l'enveloppe de couronne (16) est constituée par une coque supérieure et une coque inférieure.

3. Volant de direction selon l'une des revendications précédentes, **caractérisé en ce que** l'élément amortissant les vibrations (20, 22) est appliqué sous forme de mousse sur le squelette de couronne.

4. Volant de direction selon l'une des revendications précédentes, **caractérisé en ce que** l'élément amortissant les vibrations (20, 22) est constitué par de la mousse de polyuréthane.
